**Europäisches Patentamt**

**European Patent Office**

**Office européen des brevets**

(11) Veröffentlichungsnummer: **0 208 051**
**A2**

# EUROPÄISCHE PATENTANMELDUNG

(21) Anmeldenummer: 86102131.9

(22) Anmeldetag: 19.02.86

(51) Int. Cl.⁴: **B 62 B 3/10**

(30) Priorität: 15.03.85 DE 3509325

(43) Veröffentlichungstag der Anmeldung:
14.01.87 Patentblatt 87/3

(84) Benannte Vertragsstaaten:
AT BE CH DE FR GB IT LI LU NL SE

(71) Anmelder: Schimmeister, Renate
Hamelner Weg 5
D-3253 Hess.-Oldendorf 2 OT Fischbeck(DE)

(72) Erfinder: Schimmeister, Renate
Hamelner Weg 5
D-3253 Hess.-Oldendorf 2 OT Fischbeck(DE)

(54) Packtasche für Einkaufswagen.

(57) Die Packtasche ist ein von oben zu beschickender prismatischer Behälter aus strapazierfähigem Gewebematerial, der in seiner Größe jeweils der Raumform des Wagenkorbes eines standarisieren Einkaufswagen angepaßt ist. Der Behälter hat trapezförmige Boden- und Seitenteile, die an den Ecken fest miteinander verbunden sind und sich nach dem Einsetzen in den Wagenkorb an dessen Gitterwänden anlehnen. An seiner Oberseite sind Klappteile vorgesehen, die über Reißverschlüsse oder Knöpfe verschließbar und mit den Seitenteilen verbindbar sind.

Die Packtasche dient insbesondere zum Einpacken von Lebensmitteln und anderen Gegenständen in Einkaufsstätten, in denen die Ware mittels des Einkaufswagens vom Kunden im Selbstbedienungsverfahren im Wagenkorb gesammelt und danach an einer Abrechnungskasse bezahlt werden.

Fig.2

0208051

Renate Schimmeister

Hamelner Weg 5
3253 Hess.-Oldendorf 2
OT Fischbeck

Sch II

14.02.1986

"Packtasche für Einkaufswagen"

Die Erfindung bezieht sich auf eine Packtasche als
Tragetasche ,die insbesondere zum herausnehmbaren
Einsetzen in standartisierte Einkaufswagen in SB-Läden
o.dgl. geeignet sind.

Es ist bereits vorgeschlagen,derartige Packtaschen aus
strapazierfähigem Material der Form des Laderaumes
derartiger Einkaufswagen anzupassen.Derartige zusammenfaltbare Packtaschen sind mit oberer Abdeckung ausgestattet.

Aufgabe der Erfindung ist es,eine Packtasche in ihrer
Ausbildung zu verbessern und damit eine zwar flexible
und zusammenklappbare Tragetasche zu schaffen,die gegen
Zug-und Biegebeanspruchungen widerstandsfähig ist.

Gemäß der Erfindung ist diese Packtasche mit wannenartigem
Bodenteil als Ladefläche ausgestattet,deren seitliche nach
oben vorstehenden Randstreifen an den nach unten verkürzten
seitlichen Wandungen der Packtasche befestigt,z.B. angenäht,
verschweißt oder verklebt sind.
Hierdurch wird die Festigkeit der Packtasche erhöht und weiterhin verhindert dieses wannenartige Bodenteil,daß Flüssig-

keit nach unten auslaufen kann und damit Kleidung o.dgl. beschmutzt.

Die Bodenfläche und zwei sich gegenüberliegende Seitenwandungen sind von Traggurten oder - bändern mit obenseitigen Griffen umgeben,die nur an wenigen Stellen und zwar vorzugsweise mit der Naht zwischen dem Bodenteil und den Seitenwandungen mit dem Werkstoff der Packtasche vernäht sein kann. Es ist bevorzugt,um die Haltbarkeit der Tragebänder an den Seitenwandungen zu verbessern, mittels senkrechter Nähte diese Bänder oder Gurte mit den Seitenwandungen zu verbinden.

Bei einer bevorzugten Ausführungsform erstreckt sich der Deckel ( die Deckelklappe) über die gesamte Länge des Laderaumes der Packtasche und auch dessen Breite,wobei drei Seiten dieses Deckel frei liegen können,während eine Seite an den seitlichen Wandungen angelenkt sein kann,um die einzulagernden Gegenstände bei offener Einstellfläche und abgeklappter Deckelklappe frei bewegen zu können.
Das Material ( der Werkstoff) der Packtasche ist vorzugsweise ein Gewebe aus Kunststoffbändern-oder- streifen,die mit geringem Abstand oder eng als Kett-und Schußfäden aneinanderliegen. Als Kunststoffbänder können Nylon-Streifen verwendet werden,die ein-oder beidseitig mit Kunststoff beschichtet sein können.

Dabei ist es weiterhin bevorzugt, die Außenfläche derartiger Wandungen der Packtasche aufzurauhen,um diese bedrucken oder bekleben zu können.

Das Material ist so gewählt,daß es dünn zusammengeklappt werden kann,um es raumsparend unterzubringen bei Nichtgebrauch. Es läßt sich leicht zum Füllen auseinanderfalten und bietet einen großen Innenraum.
Diese Packtasche wird dem Einkaufswagen entnommen,gefüllt und weggetragen.Sie kann leicht gefüllt in einem PKW z.B. im Kofferraum abgestellt werden.

Weitere.Merkmale ergeben sich aus den Unteransprüchen.

Der Schutz erstreckt sich nicht nur auf die Einzelmerkmale sondern auch auf deren Kombination.

4

Auf der Zeichnung ist ein Ausführungsbeispiel der Erfindung dargestellt. Es zeigen:

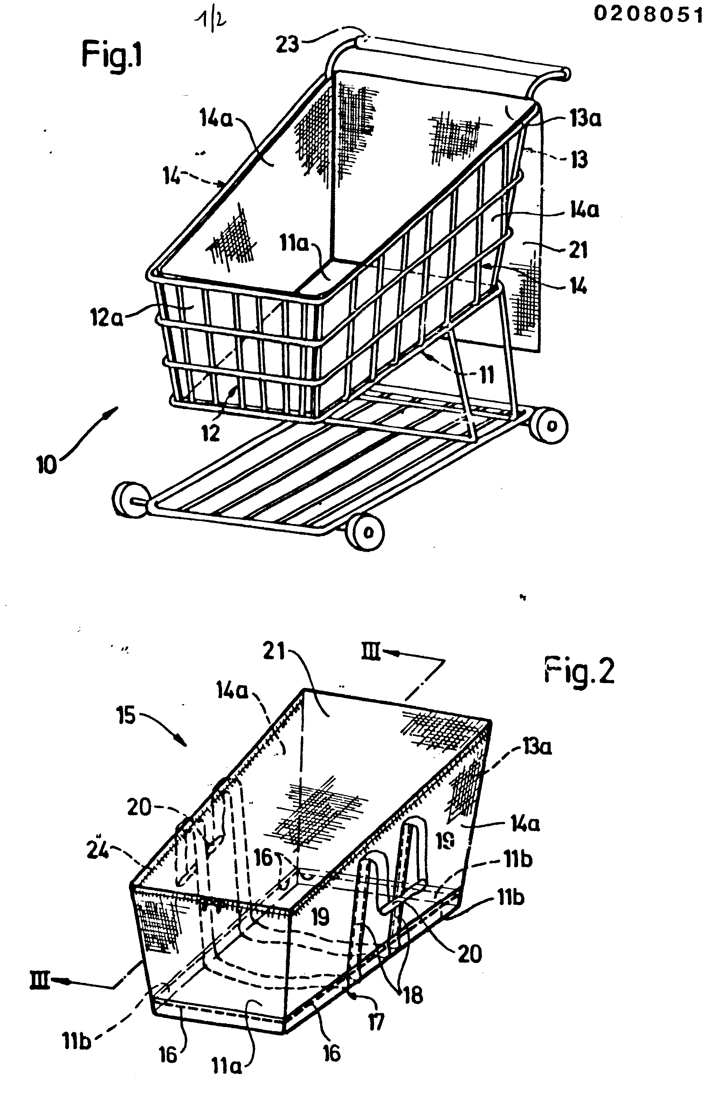

Fig. 1 eine perspektivische Ansicht eines
standardisierten Einkaufswagens

Fig. 2 eine perspektivische Ansicht einer Packtasche
zum Einsatz in einen solchen Einkaufswagen;

Fig. 3 einen Längsschnitt durch dieselbe Packtasche
entsprechend der Schnittlinie III-III in
Fig. 2.

Mit 1o ist ein genormter Einkaufswagen bezeichnet, dessen untere Ladefläche 11 und die Vorder- und Rückwandung 12,13 jeweils ein gleichschenkliges Trapez und die Seitenwandungen 14 ein ungleichmäßiges Viereck bilden. Die Vorderwandung 12 ist kleiner als die Rückwandung 13 (Hinterwandung). Diese Form ergibt sich aus der technischen Notwendigkeit, daß diese Einkaufswagen raumsparend zu Schlangen zusammengeschoben (ineinandergeschoben) werden können.

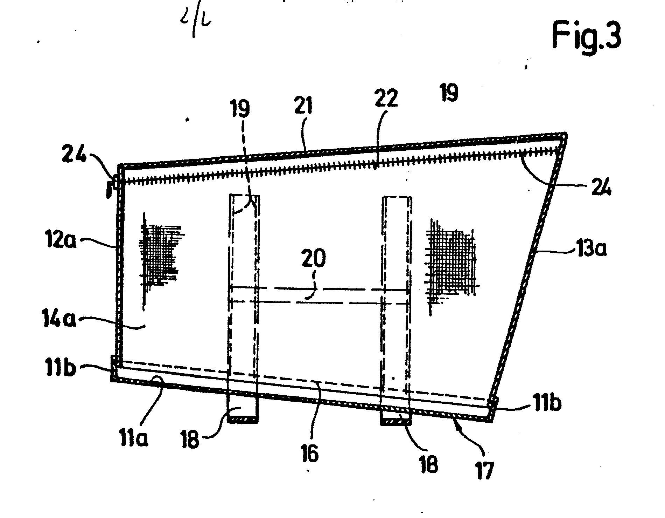

Die in einen solchen Einkaufswagen 1o einzusetzende Packtasche 15 zeigt dementsprechend dieselbe Grund- und Seitenform, wobei ein Längsschnitt (Fig. 3) durch diese Packtasche und das ungleichmäßige Viereck der Seitenwandungen 14a deutlich erkennen läßt.

Der besondere Aufbau einer derartigen Packtasche 15 liegt darin, daß die Grundfläche (Ladefläche) 11a wannenartig ausgebildet ist, so daß ein seitlicher Randstreifen 11b über die Grundfläche 11a nach oben vorsteht und damit in einer gewissen Höhe z.B. 2o bis 5o mm mit den verkürzten
Seitenwandungen 14a sowie Vorderwandung 12a und Rückwandung 13a verbunden ist, z.B. durch eine umgehende Naht 16
oder durch Verschweißen, Verkleben od.dgl.

Hierdurch wird die Festigkeit der bodenseitigen Ladefläche
11a beachtlich erhöht. Die höher gelegte Naht od.dgl. 16
ist geringer beansprucht und leichter herzustellen. Durch
die Bildung einer unteren Wanne 17 mit den Randstreifen 11b
ist nur eine waagerechte Naht 16 notwendig, um auch die
seitlichen Tragebänder oder -gurte 18 mit den Seitenwandungen 14a haltbar zu verbinden, die zusätzlich durch
senkrechte Nähte 19 an den sich gegenüberliegenden Seitenwandungen 14a verbunden sind.

Unterhalb der Ladefläche 11a verlaufen die Tragebänder 18
vorzugsweise frei (ohne Naht). Sie sind dadurch flexibler
nicht nur in ihrer Längsrichtung, sondern auch seitlich
dazu, um in zweckmäßiger Weise auch schwerere, zu tragende
Lasten wie Flaschen, Konserven od.dgl. vorteilhaft zu halten
(zu unterstützen).

Die beiden Tragebänder 18 sind obenseitig zu Schlaufen 2o
verbunden, die als Handgriffe dienen, um die Packtasche
gut handhaben zu können. Diese Griffschlaufen 2o können
im Handbereich zusammengenäht und mittels eines Stabes
(nicht dargestellt) verbunden sein, der diesen Handgriff
verstärkt und griffiger macht.

An der Oberseite der Packtasche 15 ist ein durchgehender
trapezförmiger Deckel 21 angeordnet, d.h. ein Deckel 21,
der sich über die gesamte Länge und Breite einteilig über
die obere Einstellöffnung 22 erstreckt und aus einem
flexiblen Material besteht, das wasserabweisend ist.

Dieser Deckel 21 ist nur einseitig, entweder an der Vorderwandung 12a oder an der Rückwandung 13a angelenkt. Vorzugsweise ist dieser Deckel an der Rückwandung 13a angelenkt bzw. angenäht oder besteht mit der Rückwandung 13a aus einem Stück, so daß er in eingesetztem Zustand zwischen die Oberkante der Rückwandung des Einkaufswagens 1o und dem daran befestigten Schiebegriff 23 in einen freien dadurch gebildeten Raum umgelegt (festgelegt) werden kann. Dieser Deckel 21 ist vorzugsweise dreiseitig mittels eines Reißverschlusses 24 mit den Seitenwandungen 14a und der Vorder- bzw. der Rückwandung 12a bzw. 13a lösbar verbunden. Es kann auch eine Knopfleiste vorgesehen sein.

Dieser Deckel 21 bietet einen guten Schutz in seiner geschlossenen Stellung (Lage) über dem nach oben offenen Innenraum der Packtasche 15 gegen Wind, Regen und Staub od.dgl. Auch wird dadurch verhindert, daß aus der Packtasche eingekaufte Gegenstände von dritter Seite unberechtigt entwendet werden können. Da der Deckel einseitig nur angelenkt ist, bietet er in geöffneter Lage (zurückgeschlagener Lage) einen vollständig freien Innenraum.

Die Wandung einer derartigen Packtasche 15 besteht vorzugsweise aus einem widerstandsfähigen jedoch flexiblem Werkstoff wie Kunststoff-Folie. Dabei ist es bevorzugt, dieses flächige Material aus eng gewebten Kunststoffbändern wie aus Nylon herzustellen und auf die gewünschte Länge und Breite zu schneiden und dann ineinander zu nähen (zu Kleben, zu Verschweißen od.dgl.). Es ist weiterhin bevorzugt, dieses gewebte Grundmaterial einseitig oder vorzugsweise beidseitig mit einer Kunststoffhaut zu beschichten, durch welche einerseits die Festigkeit noch

7

erhöht werden kann und andererseits eine Säuberung od.dgl. erleichtert wird.

Diese Kunststoff-Bänder können eine Breite von 2 bis 1o mm aufweisen und eine Dicke von o,2-o,5mm. Sie können auch durch Fäden aus Metall, Glas od.dgl. verstärkt sein, je nachdem, wie die Tragfähigkeit der Packtasche 15 bemessen werden soll.

Es ist weiterhin bevorzugt, die Außenseite der Packtasche 15 z.B. durch eine chemische Ätzung aufzurauhen, so daß hier für Werbeaufdrucke oder Aufkleber Druckerfarbe oder Klebstoff besser haftet.

Die Vorder-und Rückwandungen sind an den Seitenwandungen in den Ecken angenäht.

S c h u t z a n s p r ü c h e

1. Packtasche als Tragetasche zum herausnahmbaren
   Einsetzen in einen Einkaufswagen aus einem faltbaren,
   strapazierfähigen Material mit einer obenseitigen
   Abdeckung,dadurch gekennzeichnet,daß die Packtasche(15)
   mit einem wannenartigen Bodenteil (Wanne 17) ausgestattet ist,dessen nach oben vorstehende Randstreifen
   (11b) mit den seitlichen Wandungen (12,13,14a) durch
   Nähen ( Naht 16),Verschweißen oder Kleben verbunden sind.

2. Packtasche nach Anspruch 1,dadurch gekennzeichnet,daß
   die Seitenwandungen (14a) als ungleichmäßiges Viereck
   jeweils ausgebildet sind.

3. Packtasche nach Anspruch 1 oder 2,dadurch gekennzeichnet,
   daß die Deckelklappe (Deckel 21) einseitig an der einer Seitenwandungen (12a,13a) bezw. seitlichen Wandungen angelenkt
   ist und sich über die gesamte Länge und Breite der oberen
   Einstellöffnung ( 22) erstreckt.

4. Packtasche nach Anspruch 1 bis 3,dadurch gekennzeichnet,
   daß der Deckel (21) an der Oberkante der Rückwand (13a)
   angelenkt ist.

5. Packtasche nach Ansprüchen 1 bis 4,dadurch gekennzeichnet,
   daß der Deckel (21) und die Rückwand (13a) aus einem
   Stück gefertigt sind.

6. Packtasche nach den Ansprüchen 1 bis 5,dadurch gekennzeichnet,daß die freien Ränder des Deckels (21) mittels
   Reißverschluß ( 24)  mit den seitlichen Wandungen lösbar
   verbunden sind.

7. Packtasche nach Ansprüchen 1 bis 6,dadurch gekennzeichnet,
   daß die Wandungen (12a,13a,11a,17) und der Deckel (21)
   aus einem aus Kunststoff-Bändern gewebten Werkstoff bestehen

8. Packtasche nach Ansprüchen 1 bis 7,dadurch gekennzeichnet,
   daß die Kunststoff-Bänder aus Nylon o.dgl. gebildet sind.

9. Packtasche nach Ansprüchen 1 bis 8,dadurch gekennzeichnet,daß die Kunststoff-Bänder eine Breite von 2 bis 10 mm aufweisen.

10. Packtasche nach Ansprüchen 1 bis 9,dadurch gekennzeichnet,daß die Kunststoff-Bänder eine Dicke von 0,2 bis 0,5 mm aufweisen.

11. Packtasche nach Ansprüchen 1 bis 10,dadurch gekennzeichnet,daß der Werkstoff ein-oder beidseitig mit Kunststoff beschichtet ist.

12. Packtasche nach Ansprüchen 1 bis 11,dadurch gekennzeichnet,daß die Außenseiten und /oder die Innenseiten (-wandungen) zum Bedrucken oder Bekleben aufgerauht sind.

13. Packtasche nach Ansprüchen 1 bis 12,dadurch gekennzeichnet,daß die seitlichen Wandungen (12a,13) von Tragebändern oder - gurten (18) umgeben sind.

14. Packtasche nach Anspruch 1 bis 13,dadurch gekennzeichnet,daß die Tragebänder oder - gurte auf der Innenseite der Wandungen sich gegenüberliegend befestigt sind.

15. Packtasche nach Ansprüchen 1 bis 14,dadurch gekennzeichnet,daß die Tragebänder (18) parallel zueinander verlaufen.

16. Packtasche nach Ansprüchen 1 bis 14,dadurch gekennzeichnet,daß die Tragebänder (18) spitzwinklig zueinander verlaufen.

17. Packtasche nach Ansprüchen 1 bis 16,dadurch gekennzeichnet,daß die Tragebänder (18) mit der waagerechte. Naht (16) zwischen Randstreifen (11b) und Seitenwandungen (12a,13a) an diesen befestigt sind.

18. Packtasche nach Ansprüchen 1 bis 17,dadurch gekennzeichnet,daß die Tragbänder (18) mittels einer oberen Griffschlaufe (20) miteinander verbunden sind.

19. Packtasche nach Ansprüchen 1 bis 18,dadurch gekenn-
    zeichnet,daß der Werkstoff der Packtasche bezw. die
    gewebten Bänder durch Fäden aus Metall,Glas,Karbon
    verstärkt sind.

Fig.1

1/2

0208051

Fig.2

Fig.3

0208051